# EUROPEAN PATENT APPLICATION

(11) **EP 4 372 996 A2**
(43) Date of publication of application: **22.05.2024**
(21) Application number: 23205299.3
(22) Date of filing: 23.10.2023
(51) Int. Cl.: H04B 1/16, H04W 52/02

(54) **ELECTRONIC DEVICES WITH HIGH AND LOW LINEARITY RECEIVERS**

(30) Priority: 27.10.2022 US 202263420067 P; 26.09.2023 US 202318474921
(71) Applicant: Apple Inc., Cupertino, CA 95014 (US)
(72) Inventor: EL-HASSAN, Wassim, San Jose (US); DAYAL, Abhinav, San Jose (US); RUARO, Andrea, San Jose (US); BREMER, Brian H., Chicago (US); GORMAN, Daphne I., San Jose (US); SMAINI, Lydi, San Jose (US)
(74) Representative: COPA Copenhagen Patents

(57) **Abstract**

Electronic devices may be provided with wireless circuitry having an antenna, a primary receiver, and a secondary receiver. The primary receiver may be coupled to the antenna over a first signal path having a low noise amplifier. An input of the primary receiver may be coupled to the first signal path and an input of the secondary receiver may be coupled to a node on the first signal path over a second signal path. The primary receiver may consume more power and exhibit more linearity than the secondary receiver. The secondary receiver may wake while the primary receiver is asleep and may wake the primary receiver when paging signals are received. If desired, the wireless circuitry may be switched between a singlereceiver mode and a receiver diversity mode based on wireless performance metric data gathered by the primary receiver and/or the secondary receiver.

## Description

This application claims priority to U.S. patent application No. 18/474,921, filed September 26, 2023, and U.S. provisional patent application No. 63/420,067, filed October 27, 2022, which are hereby incorporated by reference herein in their entireties.

### Field

This disclosure relates generally to wireless communications, including wireless communications performed by electronic devices.

### Background

Communications systems can include electronic devices with wireless communications capabilities. An electronic device with wireless communications capabilities uses antennas to transmit and receive radio-frequency signals. An electronic device with wireless communications capabilities can have a finite amount of power, such as power provided by a battery.

If care is not taken, receiving radio-frequency signals can consume an excessive amount of power, thereby minimizing battery life for the electronic device. On the other hand, increasing power consumption can help to ensure that the electronic device correctly receives the radio-frequency signals.

### Summary

Electronic devices may be provided with wireless circuitry. The wireless circuitry may include an antenna, a primary receiver, and a secondary receiver. The primary receiver may be coupled to the antenna over a first signal path. A first low noise amplifier (LNA) may be disposed on the first signal path. The primary receiver may have a second LNA with an input coupled to the first signal path. The primary receiver may have a first digital signal processor (DSP) coupled to an output of the second LNA. The secondary receiver may have a third LNA with an input coupled to a node on the first signal path over a second signal path. The node may be disposed on the first signal path between the output of the first LNA and the input of the second LNA. The secondary receiver may have a second DSP coupled to an output of the third LNA.

The primary receiver may include circuitry with higher complexity, that consumes more power, that operates at a higher sample rate, and that exhibits more linearity than the circuitry in the secondary receiver. The antenna may receive radio-frequency energy. The first LNA may concurrently pass the radio-frequency energy to both the primary receiver and the secondary receiver. The secondary receiver may periodically wake to listen for physical downlink control channel (PDCCH) signals such as paging signals while the primary receiver is asleep. When the secondary receiver successfully decodes a PDCCH signal indicative of a data allocation for the device that requires higher linearity than is supported by the secondary receiver, the secondary receiver may wake the primary receiver for a subsequent data reception cycle. The primary receiver may then decode the signals from the radio-frequency energy using higher linearity.

If desired, the wireless circuitry may be switched between a single-receiver mode such as a high linearity mode in which the primary receiver is awake while the secondary receiver is asleep or a low linearity mode in which the primary receiver is asleep while the secondary receiver is awake and a receiver diversity mode in which both the primary and secondary receivers are awake. One or both receivers may gather wireless performance metric data from the received radio-frequency energy. One or more processors may compare the wireless performance metric data to one or more threshold values to select the operating mode to be used during a subsequent data reception cycle. For example, a single-receiver mode may be used when the wireless performance metric data exceeds a threshold value whereas the receiver diversity mode may be used when the wireless performance metric data falls below the threshold value.

An aspect of the disclosure provides an electronic device. The electronic device may include an antenna. The electronic device may include a first receiver having a first low noise amplifier (LNA). The electronic device may include a second receiver having a second LNA. The electronic device may include a first signal path that couples the antenna to an input of the first LNA. The electronic device may include a third LNA disposed on the first signal path. The electronic device may include a second signal path that couples a node on the first signal path to an input of the second LNA, the node being disposed on the first signal path between an output of the third LNA and the input of the first LNA.

An aspect of the disclosure provides a method of operating an electronic device. The method can include receiving, using an antenna, radio-frequency energy. The method can include passing, using a low noise amplifier (LNA), the radio-frequency energy to a second LNA in a first receiver and concurrently to a third LNA in a second receiver, wherein the second receiver consumes less power than the first receiver. The method can include attempting to decode, using the second receiver while the first receiver is asleep, a physical downlink control channel (PDCCH) signal from the radio-frequency energy. The method can include waking, using the second receiver responsive to the second receiver decoding the PDDCH signal, the first receiver for a subsequent data reception cycle.

An aspect of the disclosure provides a method of operating an electronic device. The method can include receiving, using an antenna, radio-frequency energy. The method can include passing, using a low noise amplifier (LNA), the radio-frequency energy to a first receiver and to a second receiver that operates at a lower sample rate than the first receiver. The method can include generating, using the second receiver during a first period, wireless performance metric data from the radio-frequency energy. The method can include attempting to decode, using the first receiver and the second receiver responsive to the wireless performance metric data gathered during the first period being less than a threshold value, a signal from the radio-frequency energy during a second period subsequent to the first period.

### Brief Description of the Drawings

FIG. 1 is a schematic block diagram of an illustrative electronic device having wireless circuitry in accordance with some embodiments.
FIG. 2 is a circuit diagram of illustrative wireless circuitry having a high linearity receiver and a low linearity receiver that concurrently receive radio-frequency energy from an antenna in accordance with some embodiments.
FIG. 3 is a flow chart of illustrative operations involved in using a high linearity receiver and a low linearity receiver to receive radio-frequency signals using an antenna in accordance with some embodiments.
FIG. 4 is a timing diagram showing how low and high linearity receivers may be activated for receiving radio-frequency signals in accordance with some embodiments.
FIG. 5 is a state diagram showing how high and low linearity receivers may be switched between low linearity, high linearity, and receiver diversity operating modes in accordance with some embodiments.
FIG. 6 is a circuit diagram showing how a supplemental low noise amplifier may be switched into use for a low linearity receiver in accordance with some embodiments.
FIG. 7 is a flow chart of illustrative operations involved in switching low and high linearity receivers between single-receiver and receiver diversity operating modes based on gathered wireless performance metric data in accordance with some embodiments.
FIG. 8 is a plot showing how illustrative wireless performance metric data may be compared to different threshold values for switching low and high linearity receivers between single-receiver and receiver diversity operating modes in accordance with some embodiments.

### Detailed Description

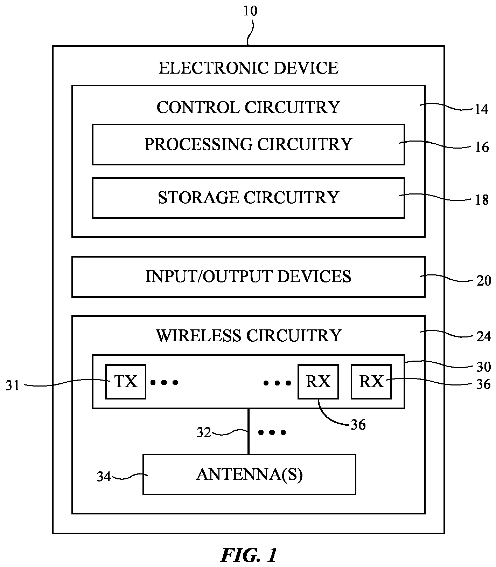

FIG. 1 is a block diagram of an illustrative electronic device 10. Device 10 may be a computing device such as a laptop computer, a desktop computer, a computer monitor containing an embedded computer, a tablet computer, a cellular telephone (mobile phone), a media player, or other handheld or portable electronic device, a smaller device such as a wristwatch device, a pendant device, a headphone or earpiece device, a device embedded in eyeglasses or other equipment worn on a user's head, or other wearable or miniature device, a television, a computer display that does not contain an embedded computer, a gaming device, a navigation device, an embedded system such as a system in which electronic equipment with a display is mounted in a kiosk or automobile, a wireless internet-connected voice-controlled speaker, a home entertainment device, a remote control device, a gaming controller, a peripheral user input device, a wireless base station or access point, equipment that implements the functionality of two or more of these devices, or other electronic equipment.

As shown in FIG. 1, device 10 may include components located on or within an electronic device housing such as housing 12. Housing 12, which may sometimes be referred to as a case, may be formed of plastic, glass, ceramics, fiber composites, metal (e.g., stainless steel, aluminum, metal alloys, etc.), other suitable materials, or a combination of these materials. In some situations, part or all of housing 12 may be formed from dielectric or other low-conductivity material (e.g., glass, ceramic, plastic, sapphire, etc.). In other situations, housing 12 or at least some of the structures that make up housing 12 may be formed from metal elements.

Device 10 may include control circuitry 14. Control circuitry 14 may include storage such as storage circuitry 18. Storage circuitry 18 may include hard disk drive storage, nonvolatile memory (e.g., flash memory or other electrically-programmable-read-only memory configured to form a solid-state drive), volatile memory (e.g., static or dynamic random-access-memory), etc. Storage circuitry 18 may include storage that is integrated within device 10 and/or removable storage media.

Control circuitry 14 may include processing circuitry such as processing circuitry 16. Processing circuitry 16 may be used to control the operation of device 10. Processing circuitry 16 may include on one or more processors such as microprocessors, microcontrollers, digital signal processors, host processors, baseband processor integrated circuits, application specific integrated circuits, central processing units (CPUs), graphics processing units (GPUs), etc. Control circuitry 14 may be configured to perform operations in device 10 using hardware (e.g., dedicated hardware or circuitry), firmware, and/or software. Software code for performing operations in device 10 may be stored on storage circuitry 18 (e.g., storage circuitry 18 may include non-transitory (tangible) computer readable storage media that stores the software code). The software code may sometimes be referred to as program instructions, software, data, instructions, or code. Software code stored on storage circuitry 18 may be executed by processing circuitry 16.

Control circuitry 14 may be used to run software on device 10 such as one or more software applications (apps). The applications may include satellite navigation applications, internet browsing applications, voice-over-internet-protocol (VOIP) telephone call applications, email applications, media playback applications, operating system functions, gaming applications, productivity applications, workplace applications, augmented reality (AR) applications, extended reality (XR) applications, virtual reality (VR) applications, scheduling applications, consumer applications, social media applications, educational applications, banking applications, spatial ranging applications, sensing applications, security applications, media applications, streaming applications, automotive applications, video editing applications, image editing applications, rendering applications, simulation applications, camera-based applications, imaging applications, news applications, and/or any other desired software applications.

To support interactions with external communications equipment, control circuitry 14 may be used in implementing communications protocols. Communications protocols that may be implemented using control circuitry 14 include internet protocols, wireless local area network (WLAN) protocols (e.g., IEEE 802.11 protocols - sometimes referred to as Wi-Fi^{®}), protocols for other short-range wireless communications links such as the Bluetooth^{®} protocol or other wireless personal area network (WPAN) protocols, IEEE 802.11ad protocols (e.g., ultra-wideband protocols), cellular telephone protocols (e.g., 3G protocols, 4G (LTE) protocols, 3GPP Fifth Generation (5G) New Radio (NR) protocols, 6G protocols, cellular sideband protocols, etc.), device-to-device (D2D) protocols, antenna diversity protocols, satellite navigation system protocols (e.g., global positioning system (GPS) protocols, global navigation satellite system (GLONASS) protocols, etc.), antenna-based spatial ranging protocols, or any other desired communications protocols. Each communications protocol may be associated with a corresponding radio access technology (RAT) that specifies the physical connection methodology used in implementing the protocol. Radio-frequency signals conveyed using a cellular telephone protocol may sometimes be referred to herein as cellular telephone signals.

Device 10 may include input-output devices 20. Input-output (I/O) devices 20 may be used to allow data to be supplied to device 10 and to allow data to be provided from device 10 to external devices. Input-output devices 20 may include user interface devices, data port devices, and other input-output components. For example, input-output devices 20 may include touch sensors, displays (e.g., touch-sensitive and/or force-sensitive displays), light-emitting components such as displays without touch sensor capabilities, buttons (mechanical, capacitive, optical, etc.), scrolling wheels, touch pads, key pads, keyboards, microphones, cameras, image sensors, light sensors, radar sensors, lidar sensors, buttons, speakers, status indicators, audio jacks and other audio port components, digital data port devices, motion sensors (accelerometers, gyroscopes, and/or compasses that detect motion), capacitance sensors, proximity sensors, magnetic sensors, force sensors (e.g., force sensors coupled to a display to detect pressure applied to the display), temperature sensors, etc. In some configurations, keyboards, headphones, displays, pointing devices such as trackpads, mice, and joysticks, and other input-output devices may be coupled to device 10 using wired or wireless connections (e.g., some of input-output devices 20 may be peripherals that are coupled to a main processing unit or other portions of device 10 via a wired or wireless link).

Electronic device 10 may include wireless circuitry 24. Wireless circuitry 24 may support wireless communications. Wireless circuitry 24 (sometimes referred to herein as wireless communications circuitry 24) may include one or more antennas 34. Antennas 34 may transmit radio-frequency signals to and/or may receive radio-frequency signals from external communications equipment. The external communications equipment may include one or more other electronic devices such as device 10, a wireless base station, or a wireless access point, as examples.

Wireless circuitry 24 may also include one or more radios 30. Radio 30 may include circuitry that operates on signals at baseband frequencies (e.g., baseband circuitry) and radio-frequency transceiver circuitry such as one or more radio-frequency transmitters (TX) 31 and two or more radio-frequency receivers (RX) 36. Each transmitter 31 may include signal generator circuitry, modulation circuitry, mixer circuitry for upconverting signals from baseband frequencies to intermediate frequencies and/or radio frequencies, amplifier circuitry such as one or more power amplifiers, digital-to-analog converter (DAC) circuitry, control paths, power supply paths, switching circuitry, filter circuitry, and/or any other circuitry for transmitting radio-frequency signals using antenna(s) 34. Each receiver 36 may include demodulation circuitry, mixer circuitry for downconverting signals from intermediate frequencies and/or radio frequencies to baseband frequencies, amplifier circuitry (e.g., one or more low-noise amplifiers (LNAs)), analog-to-digital converter (ADC) circuitry, control paths, power supply paths, signal paths, switching circuitry, filter circuitry, and/or any other circuitry for receiving radio-frequency signals using antenna(s) 34. The components of radio 30 may be mounted onto a single substrate or integrated into a single integrated circuit, chip, package, or system-on-chip (SOC) or may be distributed between multiple substrates, integrated circuits, chips, packages, or SOCs.

Radio 30 (e.g., transmitter 31 and/or receiver(s) 36) may be coupled to one or more antennas 34 over one or more signal paths 32. Each signal path 32 may include one or more radio-frequency transmission lines, switching circuitry, filter circuitry, coupler circuitry, etc. Radio-frequency transmission lines in signal paths 32 may include coaxial cables, microstrip transmission lines, stripline transmission lines, edge-coupled microstrip transmission lines, edge-coupled stripline transmission lines, transmission lines formed from combinations of transmission lines of these types, etc. Radio-frequency transmission lines in signal paths 32 may be integrated into rigid and/or flexible printed circuit boards if desired. One or more signal paths 32 (e.g., one or more radio-frequency transmission lines in one or more signal paths 32) may be shared between multiple transmitters 31 and/or multiple receivers 36 in radio 30 and/or between multiple radios 31. If desired, one or more radio-frequency front end (RFFE) modules may be interposed on one or more signal paths 32 (e.g., external to radio 30).

In performing wireless transmission, the baseband circuitry in radio 30 may provide baseband signals (e.g., digital signals containing wireless data for transmission to one or more other devices) to transmitter 31. For example, the baseband circuitry may process incoming digital data through encoding, modulation/demodulation, time and frequency conversions, pulse shaping, etc., to generate processed baseband data that is conveyed by the baseband signals. Transmitter 31 may modulate the processed baseband data onto radio-frequency signals for transmission by antenna(s) 34. For example, transmitter 31 may include mixer circuitry and local oscillator circuitry for up-converting the baseband signals to radio frequencies prior to transmission over antenna(s) 34. The transmitter may also include digital-to-analog converter (DAC) circuitry for converting signals between digital and analog domains, amplifier circuitry (e.g., power amplifier circuitry) for amplifying the radio-frequency signals, filter circuitry, switching circuitry, etc. The transmitter may transmit the radio-frequency signals over antenna(s) 34 via signal path(s) 32. Antenna(s) 34 may transmit the radio-frequency signals to external wireless equipment by radiating the radio-frequency signals into free space.

Antenna(s) 34 may be formed using any desired antenna structures for conveying radio-frequency signals. For example, antenna(s) 34 may include antennas with resonating elements that are formed from loop antenna structures, patch antenna structures, inverted-F antenna structures, slot antenna structures, planar inverted-F antenna structures, helical antenna structures, monopole antennas, dipoles, hybrids of these designs, etc. Filter circuitry, switching circuitry, impedance matching circuitry, and/or other antenna tuning components may be adjusted to adjust the frequency response and wireless performance of antenna(s) 34 over time. If desired, two or more of antennas 34 may be integrated into a phased antenna array (sometimes referred to herein as a phased array antenna) in which each of the antennas conveys radio-frequency signals with a respective phase and magnitude that is adjusted over time so the radio-frequency signals constructively and destructively interfere to produce a signal beam in a given/selected beam pointing direction (e.g., towards external communications equipment).

The term "convey radio-frequency signals" as used herein means the transmission and/or reception of the radio-frequency signals (e.g., for performing unidirectional and/or bidirectional wireless communications with external wireless communications equipment). Similarly, the term "convey wireless data" as used herein means the transmission and/or reception of wireless data using radio-frequency signals. Antenna(s) 34 may transmit the radio-frequency signals by radiating the radio-frequency signals into free space (or to free space through intervening device structures such as a dielectric cover layer). Antenna(s) 34 may additionally or alternatively receive the radio-frequency signals from free space (e.g., through intervening devices structures such as a dielectric cover layer). The transmission and reception of radio-frequency signals by antennas 34 each involve the excitation or resonance of antenna currents on an antenna resonating element in the antenna by the radio-frequency signals within the frequency band(s) of operation of the antenna.

In performing wireless reception, antenna(s) 34 may receive radio-frequency signals from one or more other devices (external communications equipment). Antenna(s) 34 may pass the received radio-frequency signals to one or more receivers 36 in radio 30 over signal path(s) 32. Each receiver 36 may include demodulation circuitry (e.g., in a corresponding digital signal processor (DSP)), mixer circuitry for down-converting signals from intermediate frequencies and/or radio frequencies to baseband frequencies, amplifier circuitry (e.g., one or more low-noise amplifiers (LNAs)), analog-to-digital converter (ADC) circuitry, control paths, power supply paths, signal paths, switching circuitry, filter circuitry, and/or any other circuitry for receiving radio-frequency signals using antenna(s) 34. The receiver may convert the received radio-frequency signals into baseband signals (e.g., digital data samples). The receiver may transmit the baseband signals to the baseband circuitry (e.g., a DSP) over a digital interface. The baseband circuitry may process the incoming digital data from the received baseband signals through decoding, demodulation, time and frequency conversions, pulse shaping, etc., to extract wireless data from the baseband signals. The extracted wireless data may be passed up the protocol stack or to an application processor for further processing.

Radio 30 may transmit and/or receive radio-frequency signals within corresponding frequency bands at radio frequencies (sometimes referred to herein as communications bands or simply as "bands"). The frequency bands handled by transceiver circuitry 30 may include wireless local area network (WLAN) frequency bands (e.g., Wi-Fi^{®} (IEEE 802.11) or other WLAN communications bands) such as a 2.4 GHz WLAN band (e.g., from 2400 to 2480 MHz), a 5 GHz WLAN band (e.g., from 5180 to 5825 MHz), a Wi-Fi^{®} 6E band (e.g., from 5925-7125 MHz), and/or other Wi-Fi^{®} bands (e.g., from 1875-5160 MHz), wireless personal area network (WPAN) frequency bands such as the 2.4 GHz Bluetooth^{®} band or other WPAN communications bands, cellular telephone frequency bands (e.g., bands from about 600 MHz to about 5 GHz, 3G bands, 4G LTE bands, 5G New Radio Frequency Range 1 (FR1) bands below 10 GHz, 5G New Radio Frequency Range 2 (FR2) bands between 20 and 60 GHz, 6G bands at sub-THz or THz frequencies from around 100-1000 GHz, cellular sidebands, etc.), other centimeter or millimeter wave frequency bands between 10-100 GHz, near-field communications frequency bands (e.g., at 13.56 MHz), satellite navigation frequency bands (e.g., a GPS band from 1565 to 1610 MHz, a Global Navigation Satellite System (GLONASS) band, a BeiDou Navigation Satellite System (BDS) band, etc.), ultra-wideband (UWB) frequency bands that operate under the IEEE 802.15.4 protocol and/or other ultra-wideband communications protocols, communications bands under the family of 3GPP wireless communications standards, communications bands under the IEEE 802.XX family of standards, industrial, scientific, and medical (ISM) bands such as an ISM band between around 900 MHz and 950 MHz or other ISM bands below or above 1 GHz, one or more unlicensed bands, one or more bands reserved for emergency and/or public services, and/or any other desired frequency bands of interest. Wireless circuitry 24 may also be used to perform spatial ranging (e.g., radar) operations if desired.

The example of FIG. 1 is illustrative and non-limiting. While control circuitry 14 is shown separately from wireless circuitry 24 in the example of FIG. 1 for the sake of clarity, wireless circuitry 24 may include processing circuitry (e.g., one or more processors) that forms a part of processing circuitry 16 and/or storage circuitry that forms a part of storage circuitry 18 of control circuitry 14 (e.g., portions of control circuitry 14 may be implemented on wireless circuitry 24). As an example, control circuitry 14 may include baseband circuitry (e.g., one or more baseband processors), digital control circuitry, analog control circuitry, and/or other control circuitry that forms part of radio 30. The baseband circuitry may, for example, access a communication protocol stack on control circuitry 14 (e.g., storage circuitry 18) to: perform user plane functions at a PHY layer, MAC layer, RLC layer, PDCP layer, SDAP layer, and/or PDU layer, and/or to perform control plane functions at the PHY layer, MAC layer, RLC layer, PDCP layer, RRC, layer, and/or non-access stratum (NAS) layer.

During wireless communications, external equipment (e.g., a base station of a cellular telephone network, a scheduler associated or managed by the network, etc.) may allocate time and/or frequency resources to device 10 for the transmission of data (e.g., in an uplink direction from device 10 to the base station and/or in a downlink direction from the base station to device 10). Device 10 may have a battery that powers the components of device 10. As such, device 10 will often have a finite amount of power (e.g., when the device is not connected to an external power source such as a charger or power outlet).

Depending on received signal quality and the data allocation, a receiver can adapt its performance in order to minimize power and conserve battery. For example, a receiver can adapt its linearity and power consumption depending on different metrics such as the signal-to-noise ratio (SNR) of received signals, the presence of interferers, and signal monitoring. The receiver may consume less power to operate with less linearity and may consume more power to operate with more linearity. The receiver may operate using less linearity (lower power) when the received signal to decode is robust (e.g., modulated using a low-order modulation scheme) and there are no interferers that stress the dynamic range of the receiver. On the other hand, the receiver may operate using more linearity (higher power) when there are interferers present and/or when the received signals to decode are modulated using a high modulation order.

However, in practice, changing the configuration of a single receiver to either operate using low linearity or high linearity can be challenging. For example, it can be difficult to synchronize receiver timing and DSP optimization for the receiver over time, because the received signal first has to be processed by the entire receive chain even if there is no data allocation (e.g., a physical downlink shared channel (PDSCH) allocation) after a corresponding physical downlink control channel (PDCCH) signal has been received.

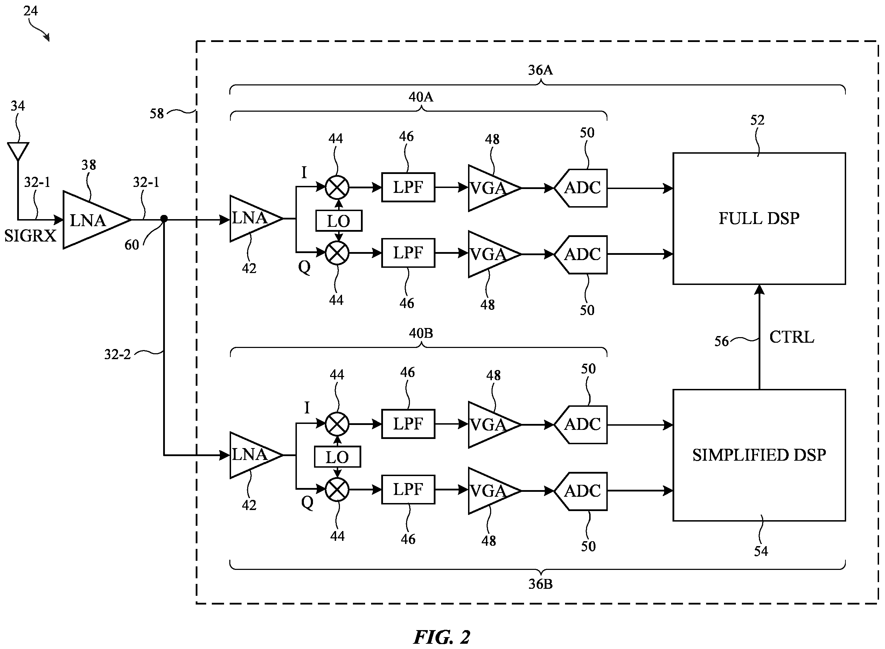

To mitigate these issues while allowing device 10 to reduce its overall power consumption, wireless circuitry 24 may include at least a first receiver 36 having a relatively high linearity and a second receiver 36 having a relatively low linearity for receiving radio-frequency signals using a corresponding antenna 34. FIG. 2 is a circuit diagram showing one example of how wireless circuitry 24 may include at least a first receiver 36 having a relatively high linearity and a second receiver 36 having a relatively low linearity for receiving radio-frequency signals using a corresponding antenna 34.

As shown in FIG. 2, wireless circuitry 24 may include a first receiver 36 such as receiver 36A and a second receiver 36 such as receiver 36B. Receiver 36A may sometimes be referred to herein as primary receiver 36A. Receiver 36B may sometimes be referred to herein as secondary receiver 36B. A given antenna 34 may be coupled to the input of primary receiver 36A over a first signal path such as signal path 32-1 (e.g., a first radio-frequency transmission line). A first amplifier such as low noise amplifier (LNA) 38 may be disposed on signal path 32-1. The input of LNA 38 may be coupled to antenna 34. The output of LNA 38 may be couple to the input of primary receiver 36A.

Wireless circuitry 24 may also include a second signal path coupled to the input of secondary receiver 36B such as signal path 32-2 (e.g., a second radio-frequency transmission line). Signal path 32-2 may be coupled to signal path 32-1 at a radio-frequency node such as node 60. Node 60 may be disposed on signal path 32-1 between the output of LNA 38 and the input of primary receiver 36A. Node 60 may include a radio-frequency signal divider or splitter, a radio-frequency coupler, or other passive circuitry that concurrently passes radio-frequency signals output by LNA 38 to both primary receiver 36A and secondary receiver 36B. Node 60 may be free from switches.

Primary receiver 36A may include front end circuitry 40A and baseband circuitry such as DSP 52. The input of front end circuitry 40A and thus primary receiver 36A may be coupled to signal path 32-1. The output of front end circuitry 40A may be coupled to the input of DSP 52. In other words, signal path 32-1, LNA 38, and front end circuitry 40A may form a receive chain or receive path for primary receiver 36A.

Similarly, secondary receiver 36B may include front end circuitry 40B and baseband circuitry such as DSP 54. The input of front end circuitry 40B and thus secondary receiver 36B may be coupled to signal path 32-2. The output of front end circuitry 40B may be coupled to the input of DSP 54. In other words, signal path 32-1, LNA 38, node 60, signal path 32-2, and front end circuitry 40B may form a receive chain or receive path for secondary receiver 36B. DSP 54 in secondary receiver 36B may be coupled to DSP 52 in primary receiver 36A over control path 56 (e.g., an inter-receiver or inter-processor digital control path).

Front end circuitry 40A and 40B may each include a respective input amplifier such as LNA 42, mixer circuitry such as mixers 44 coupled to the output of LNA 42 (e.g., in-phase and quadrature-phase (I/Q) mixers in implementations where front end 40A includes I/Q paths between LNA 42 and the corresponding DSP), filter circuitry such as low-pass filters (LPF) 46 coupled to the output of mixers 44, additional amplifiers such as variable gain amplifiers (VGAs) 48 coupled to the output of LPFs 46, and converter circuitry such as analog-to-digital converters (ADCs) coupled to the output of VGAs 48.

The input of the LNA 42 in front end circuitry 40A may be coupled to signal path 32-1. The output of the ADCs 50 in front end circuitry 40A may be coupled to DSP 52. The input of the LNA 42 in front end circuitry 40B may be coupled to signal path 32-2. The output of the ADCs 50 in front end circuitry 40B may be coupled to DSP 54. If desired, primary receiver 36A and secondary receiver 36B may both be disposed on a common substrate such as system-on-chip (SOC) 58 (e.g., a radio-frequency SOC or integrated circuit package). Receivers 36A and 36B may be disposed on or integrated into different respective integrated circuits (ICs) if desired. LNA 38, which is external to SOC 58, may sometimes be referred to herein as external LNA (eLNA) 38, whereas LNAs 42, which are internal to SOC 58, may sometimes be referred to herein as internal LNAs (iLNAs) 42 (e.g., LNAs implemented using CMOS technology on SOC 58).

Control circuitry 14 (FIG. 1) may control receivers 36A and 36B to operate either in a fully powered mode or state (sometimes referred to herein as an active or awake state) or in a reduced power mode or state (sometimes referred to herein as an inactive, sleep, or asleep state/mode). In the awake state (sometimes referred to herein as being awake or active), the receiver may actively receive and process radio-frequency signals (e.g., may demodulate/decode the radio-frequency signals to recover wireless data from the received signals). In the awake state, the components of the receiver may be fully powered on or may otherwise receive a relatively high amount of power (e.g., relatively high power supply voltages).

In the asleep state (sometimes referred to herein as being asleep or inactive), even though radio-frequency signals may still be incident upon antenna 34, the receiver does not actively receive or process the radio-frequency signals (e.g., does not demodulate/decode the radio-frequency signals to recover wireless data from the received signals). In the asleep state, one or more of the components of the receiver may be powered off or may receive a relatively low amount of power (e.g., relatively low power supply voltages).

If desired, one or more components of the receiver may continue to draw power when the receiver is in the asleep state, thereby allowing the components of the receiver to continue to meet radio-frequency operating requirements (e.g., start-up time requirements, settling time requirements, etc.). The receivers may also be operable in a completely powered off or turned off state, in which none of the components in the receiver draw power. The receivers may be in the powered off state when device 10 is powered off or turned off, for example. Transitioning the receiver from the asleep state or the powered off state to the awake state may sometimes be referred to herein as waking or activating the receiver.

Control circuitry 14 may provide control signals that switch the receiver between the powered off, asleep, and awake states as needed over time for communication and/or to conserve battery power when not needed. As one example, wireless circuitry 24 may include one or more switches (e.g., transistors such as field effect transistors (FETs), etc.) disposed on power supply lines (not shown) coupled to one or more of the components of the receiver. The switches may have control terminals (e.g., gate terminals) that receive control signals from control circuitry 14 (FIG. 1).

Control circuitry 14 may use the control signals to selectively power off (disable) one or more of the components of the receiver to place the receiver in the asleep or powered off states and that selectively power on (enable) the components of the receiver to place the receiver in the awake state. For example, when the receiver is in the asleep or powered off state, the control signals may control the switches on one or more of the power supply lines to form an open circuit, to form a very high impedance (e.g., an impedance that exceeds a threshold impedance value), or to form a very low transconductance gₘ (e.g., a transconductance that is less than a threshold transconductance value) through the switch to power off one or more components of the receiver.

On the other hand, when the receiver is in the awake state, the control signals may control the switches on the power supply lines to form a closed circuit, a low impedance (e.g., an impedance less than a threshold impedance value), or a high transconductance (e.g., a transconductance greater than a threshold transconductance value) through the switch to power on the components of the receiver. As such, the receiver may consume (draw) less power in the asleep state than in the active state and may, if desired, consume less power in the powered off state than in the asleep state. In this way, power consumption may be reduced in device 10, thereby maximizing battery life, by placing the receiver in the asleep state when not needed.

The components of primary receiver 36A may have greater processing complexity and may consume more processing resources on wireless circuitry 24 than the components of secondary receiver 36B. When in the awake state, primary receiver 36A may consume more power than secondary receiver 36B. For example, one or more of the components in the front end circuitry 40A of primary receiver 36A may have higher complexity and/or may consume more power and thus exhibit higher linearity (e.g., higher peak/maximum linearity) and higher dynamic range (e.g., higher peak/maximum dynamic range) than the corresponding components in the front end circuitry 40B of secondary receiver 36B (e.g., the LNA 42, VGAs 48, and/or ADCs 50 in front end circuitry 40A may have higher complexity and/or may consume more power than the LNA 42, VGAs 48, and/or ADCs 50 in front end circuitry 40B).

In addition, DSP 54 in secondary receiver 36B may be implemented using circuitry having less complexity and that consumes less power than the circuitry used to implement DSP 52 of primary receiver 36A. DSP 52 may therefore sometimes be referred to herein as full DSP 52 whereas DSP 54 is sometimes referred to herein as simplified DSP 54. Simplified DSP 54 may include a dedicated processing circuitry (e.g., a dedicated processing core) that operates on a smaller set of samples (e.g., with a lower sampling rate) than full DSP 52.

Simplified DSP 54 may, for example, perform the demodulation/decoding operations necessary to recover PDCCH data in radio-frequency signals received by antenna 34 but that are otherwise insufficient to fully decode PDSCH data in the radio-frequency signals received by antenna 34 (e.g., simplified DSP 54 may be optimized only for recovering received control channel, synchronization, and paging signals). On the other hand, full DSP 52 may perform the demodulation/decoding operations necessary to recover both PDSCH data and PDCCH data in radio-frequency signals received by antenna 34. Full DSP 52 may, for example, successfully decode radio-frequency signals that have been modulated using higher order modulation schemes than simplified DSP 54.

Secondary receiver 36B may therefore operate as a dedicated low power and low linearity receiver. Secondary receiver 36B may be periodically active (with relatively low linearity) such as during DRX cycles and/or CDRX cycles (e.g., paging cycles) of device 10 (e.g., as scheduled by the network and/or given by the communications protocol governing receivers 36A and 36B). Secondary receiver 36B may listen for (e.g., attempt to decode) paging signals received by antenna 34 when active. The paging signals are of low modulation order and are simple enough to be correctly processed and decoded by simplified DSP 54, despite the low linearity of front end circuitry 40B and the low power consumption of secondary receiver 36B. Primary receiver 36A may remain asleep while secondary receiver 36B is active to conserve power. Secondary receiver 36B may sometimes also be referred to herein as wake up receiver 36B, simplified receiver 36B, or low linearity receiver 36B whereas primary receiver 36A is sometimes referred to herein as high linearity receiver 36A or full receiver 36A.

When secondary receiver 36B receives and decodes a paging signal indicating that the network has allocated data for receipt by device 10 (e.g., data having a higher modulation order or otherwise requiring higher linearity than supported by receiver 36B), simplified DSP 54 may transmit a control signal CTRL to primary receiver 36A over control path 56 that wakes primary receiver 36A (e.g., during the next or a subsequent DRX cycle). Primary receiver 36A may then enter the awake state and may receive and process (e.g., attempt to decode) the data in the radio-frequency signals received by antenna 34. By only activating primary receiver 36A when data requiring high linearity has been allocated for device 10, power consumption may be minimized in device 10. Using secondary receiver 36B to monitor for paging signals and to wake primary receiver 36A may mitigate the timing and DSP optimization challenges associated with switching a single receiver between low and high linearity states.

For example, radio-frequency energy may be incident upon antenna 34. Antenna 34 may pass the radio-frequency energy to LNA 38 over signal path 32-1. The radio-frequency energy may include radio-frequency signals SIGRX (e.g., PDCCH signals such as paging signals or PDSCH signals carrying PDSCH data) when external equipment transmits the radio-frequency signals to device 10. LNA 38 may amplify the radio-frequency energy (e.g., radio-frequency signals SIGRX) and may concurrently pass the radio-frequency energy to front end circuitry 40A of primary receiver 36A over signal path 32-1 and to front end circuitry 40B of secondary receiver 36B over signal path 32-2 (via node 60).

When primary receiver 36A is asleep, primary receiver 36A does not process or attempt to decode the received radio-frequency energy. During a period in which secondary receiver 36B is awake, the LNA 42 in front end circuitry 40B may further amplify the received radio-frequency energy. The mixers 44 in front end circuitry 40B may then downconvert the received radio-frequency energy using a local oscillator (LO). The LPF 46 in front end circuitry 40B may then filter the downconverted signals, which are then further amplified by the VGAs 48 and converted from the analog domain to the digital domain (e.g., as digital baseband signals) using the ADCs 50 in front end circuitry 40B. Simplified DSP 54 may then attempt to demodulate/decode the digital baseband signals. When simplified DSP 54 successfully recovers a paging signal for device 10 indicating that data has been allocated by the network for reception at device 10, simplified DSP 54 may wake primary receiver 36A.

When primary receiver 36A is awake, secondary receiver 36B may, if desired, be asleep to conserve power. If desired, secondary receiver 36B may remain asleep until the next DRX cycle. The LNA 42 in front end circuitry 40A may further amplify the received radio-frequency energy. The mixers 44 in front end circuitry 40A may then downconvert the received radio-frequency energy using a local oscillator (LO). The LPF 46 in front end circuitry 40A may then filter the downconverted signals, which are then further amplified by the VGAs 48 and converted from the analog domain to the digital domain (e.g., as digital baseband signals) using the ADCs 50 in front end circuitry 40A. Full DSP 52 may then attempt to demodulate/decode the digital baseband signals (e.g., to recover PDSCH data from the received radio-frequency energy). When there is no further data allocated to device 10, primary receiver 36A may return to sleep and secondary receiver 36B may continue to periodically wake to listen for paging signals.

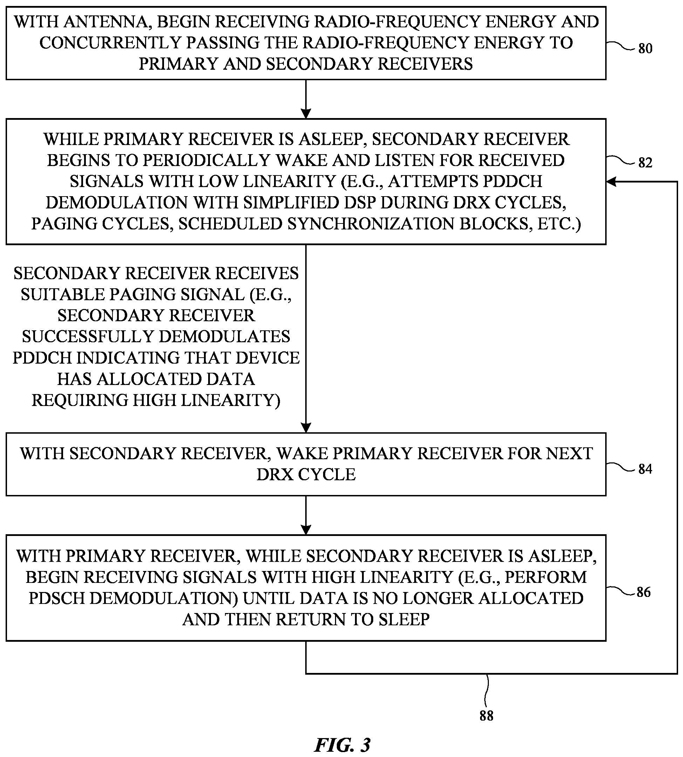

FIG. 3 is a flow chart of illustrative operations that may be performed by primary receiver 36A and secondary receiver 36B to receive radio-frequency signals from external communications equipment. At operation 80, antenna 34 may begin to receive radio-frequency energy. LNA 38 may amplify the received radio-frequency energy. Signal path 32-1 may pass a first portion the radio-frequency energy to primary receiver 36A. Node 60 and signal path 32-2 may concurrently pass a second portion of the radio-frequency energy to secondary receiver 36B.

At operation 82, while primary receiver 36A is asleep, secondary receiver 36B may begin to periodically wake to listen for received signals with low linearity (e.g., during periodic DRX cycles, paging cycles, synchronization block cycles, etc.). For example, simplified DSP 54 may attempt to perform PDCCH modulation on the received signals when secondary receiver 36B is awake. When secondary receiver 36B receives a suitable paging signal (e.g., when simplified DSP 54 successfully performs PDCCH modulation to recover a paging signal indicative of device 10 being allocated data requiring relatively high linearity), processing may proceed to operation 84.

At operation 84, secondary receiver 36B may transmit control signal CTRL to primary receiver 36A over control path 56 to wake primary receiver 36A. Primary receiver 36A may then enter the awake state for the next DRX cycle.

At operation 86, primary receiver 36A may begin receiving radio-frequency signals with high linearity. For example, full DSP 52 may perform PDSCH demodulation on the received signals when primary receiver 36A is awake. If desired, secondary receiver 36B may be asleep to conserve power. Primary receiver 36A may continue to receive radio-frequency signals until data is no longer allocated to device 10. At this point, primary receiver 36A may return to sleep and processing may loop back to operation 82 to listen for subsequent paging signals.

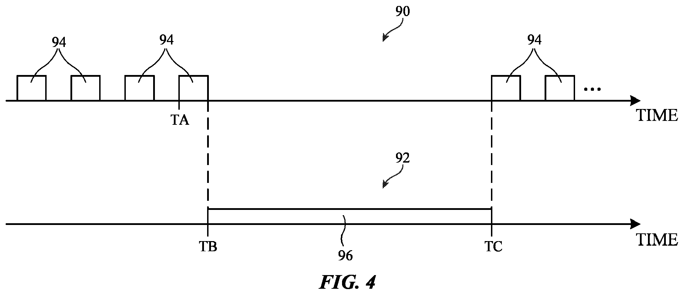

FIG. 4 includes timing diagrams showing how receivers 36A and 36B may be activated to receive radio-frequency signals. Timing diagram 90 of FIG. 4 plots the operation of secondary receiver 36B whereas timing diagram 92 plots the operation of primary receiver 36A. Secondary receiver 36B may be awake during blocks 94 and may be asleep between blocks 94. Blocks 94 may be periodic/cyclical blocks that correspond to DRX cycles, CDRX cycles, synchronization burst cycles (e.g., periods in which the base station transmits synchronization signal blocks), paging opportunity reception cycles (e.g., periods in which the base station transmits paging signals), SSB-based RRM Measurement Timing Configuration (SMTC) window cycles (e.g., periods in which frequency scans are performed for determining whether to perform handover), or other periods, as examples. Blocks 94 need not be periodic or cyclical.

During blocks 94, secondary receiver 36B may listen for paging signals or other signals indicative of device 10 needing to transition to high linearity reception (e.g., while processing operation 82 of FIG. 3). In the example of FIG. 4, secondary receiver 36B may receive a paging signal during the block 94 beginning at time TA. Secondary receiver 36B may then control primary receiver 36A to wake during the next DRX cycle (e.g., beginning at time TB). At this time, secondary receiver 36B may go to sleep to conserve power. Primary receiver 36A may wake at time TB and may remain awake for the duration of block 96. Primary receiver 36A may be asleep outside of block 96. During block 96, primary receiver 36A may listen for and may receive (attempt to decode) PDSCH data in the received radio-frequency energy with high linearity (e.g., while processing operation 86 of FIG. 3). Once there is no further PDSCH data allocated to device 10 (e.g., at time TC), primary receiver 36A may go to sleep and secondary receiver 36B may continue to wake during blocks 94 to listen for signals with low linearity.

In the example of FIG. 4, only secondary receiver 36B is awake when device 10 only requires a low level of linearity to properly decode signals (e.g., PDCCH signals) incident upon antenna 34 and only primary receiver 36A is awake when device 10 requires a high level of linearity to properly decode signals (e.g., PDSCH signals) incident upon antenna 34. Wireless circuitry 24 (SOC 58 of FIG. 2 or radio 30 of FIG. 1) may sometimes be referred to herein as operating in a low linearity mode when secondary receiver 36B is awake (active) while primary receiver 36A is asleep (inactive) and may sometimes be referred to herein as operating in a high linearity mode when primary receiver 36A is awake while secondary receiver 36B is asleep.

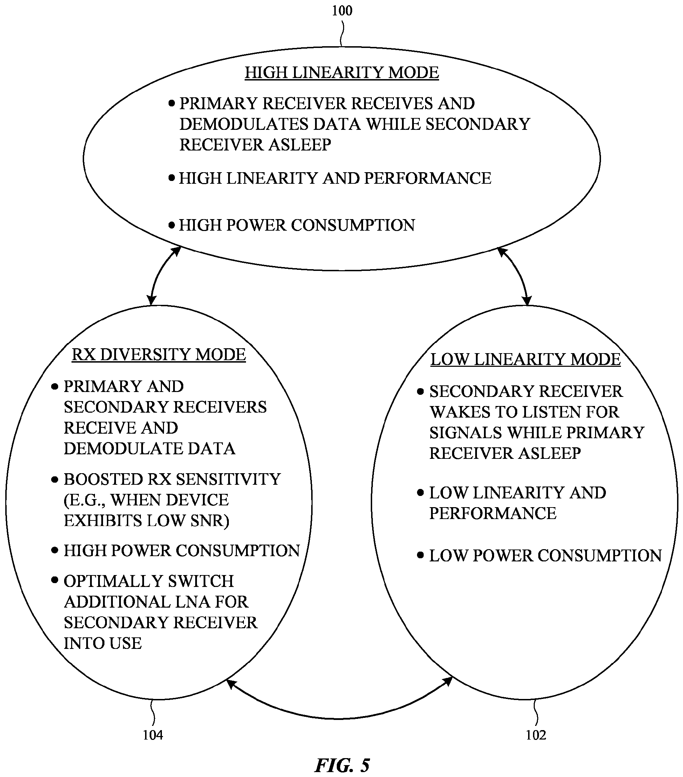

Both the high linearity mode and the low linearity mode represent single-receiver modes in which only a single one of receivers 36A and 36B are awake at a given time. If desired, wireless circuitry 24 (SOC 58 of FIG. 2 or radio 30 of FIG. 1) may also be operable in a receiver (RX) diversity mode in which both receivers 36A and 36B are awake at the same time. FIG. 5 is a state diagram showing these illustrative operating modes for wireless circuitry 24.

As shown in FIG. 5, wireless circuitry 24 may be operable in RX diversity mode (state) 104 or in a single-receiver mode such as high linearity mode (state) 100 or low linearity mode (state) 102. In low linearity mode 102, secondary receiver 36B may periodically wake to listen for signals while primary receiver 36A is asleep. Wireless circuitry 24 may receive radio-frequency signals with low linearity and low levels of overall receiver performance when in low linearity mode 102. On the other hand, wireless circuitry 24 may consume a minimal amount of power in low linearity mode 102.

In high linearity mode 104, primary receiver 36A may be awake and may receive and demodulate data (e.g., PDSCH data). Secondary receiver 36B may be asleep to conserve power. Wireless circuitry 24 may receive radio-frequency signals with high linearity and high levels of overall receiver performance when in high linearity mode 100. On the other hand, wireless circuitry 24 may consume a relatively high amount of power in high linearity mode 100.

In RX diversity mode 104, primary receiver 36A and secondary receiver 36B may both be concurrently awake, may concurrently receive radio-frequency signals, and may concurrently demodulate/decode data from the received radio-frequency signals (e.g., PDSCH data, PDCCH data, etc.). Using primary receiver 36A and secondary receiver 36B to concurrently receive the signals may serve to boost the receive sensitivity of wireless circuitry 24. This may help to ensure that wireless circuitry 24 is able to properly decode the data from the received signals when device 10 exhibits relatively poor radio-frequency channel conditions (e.g., relatively low SNR). Wireless circuitry 24 may consume a relatively high amount of power in RX diversity mode 104.

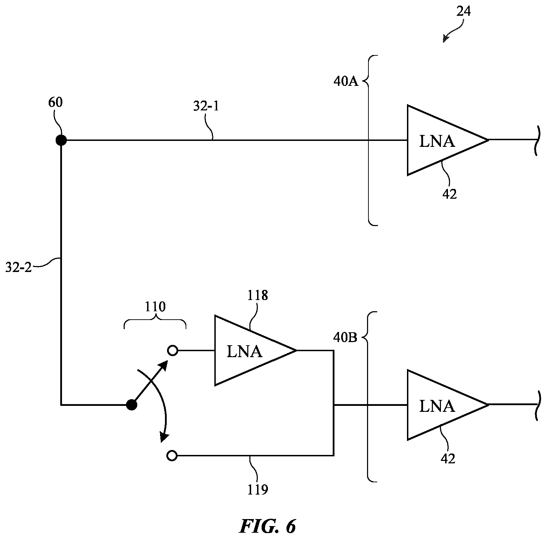

If desired, when operating in RX diversity mode 104, an additional LNA may be switched into use for secondary receiver 36B to help compensate for the low linearity of secondary receiver 36B while receiving signals. FIG. 6 is a circuit diagram showing one example of how an additional LNA may be switched into use for secondary receiver 36B in the RX diversity mode.

As shown in FIG. 6, an additional LNA 118 may be disposed on signal path 32-2 between node 60 and the input of the LNA 42 in secondary receiver 36B. LNA 118 may be external to SOC 58 (FIG. 2) or may be formed on SOC 58 (e.g., LNA 118 may be an iLNA or an eLNA). Switching circuitry such as switch 110 may be disposed on signal path 32-2 between node 60 and LNA 118. Signal path 32-2 may also include a bypass path 119 coupled around LNA 118. Switch 110 may have a first state in which switch 110 couples node 60 to the input of LNA 118, thereby switching LNA 118 into use along signal path 32-2. Switch 110 may also have a second state in which switch 110 couples node 60 to bypass path 119, thereby switching LNA 118 out of use along signal path 32-2 (e.g., bypassing LNA 118).

Switch 110 may be toggled to switch LNA 118 into use as necessary over time. If desired, switch 110 may switch LNA 118 into use when wireless circuitry 24 is in RX diversity mode 104 (FIG. 5). LNA 118 may provide further gain to the received signals to help mitigate the low linearity of secondary receiver 36B, thereby helping secondary receiver 36B to correctly receive/decode data (e.g., PDSCH data) while operating in RX diversity mode 104. The example of FIG. 6 is illustrative and non-limiting. LNA 118 may be coupled to the input of LNA 42 using any desired architecture. LNA 118 and switch 110 may be omitted if desired.

Wireless circuitry 24 may gather wireless performance metric data from the received radio-frequency signals in one or more of modes 100-104 of FIG. 5. For example, in low linearity mode 102, secondary receiver 36B may gather (e.g., generate, produce, compute, calculate, sense, etc.) wireless performance metric data from the received radio-frequency signals. In high linearity mode 100, primary receiver 36A may gather wireless performance metric data from the received radio-frequency signals. In RX diversity mode 104, primary receiver 36A and/or secondary receiver 36B may gather wireless performance metric data from the received radio-frequency signals. The wireless performance metric data may include received power level values, SNR values, noise floor values, error rate values, receive sensitivity values, information identifying modulation order of the received signals, or any other desired wireless performance metric data values characterizing the performance of wireless circuitry 24 in receiving radio-frequency signals and/or data. Wireless circuitry 24 may transition between modes 100-104 based on the gathered wireless performance metric data and, if desired, based on the current mode of wireless circuitry 24.

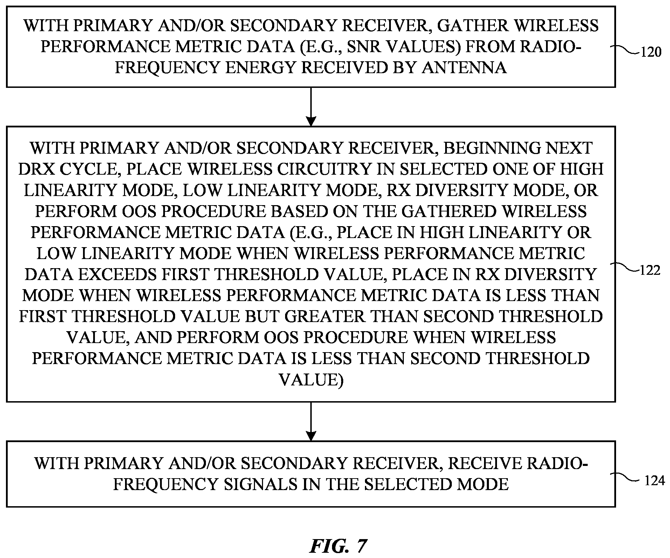

FIG. 7 is a flow chart of illustrative operations that may be performed by wireless circuitry 24 to transition switch between modes 100-104 of FIG. 5 based on gathered wireless performance metric data. The operations of FIG. 7 may, for example, be performed after operation 80 of FIG. 3.

At operation 120, when secondary receiver 36B is awake, secondary receiver 36B may gather wireless performance metric data from the radio-frequency energy (e.g., radio-frequency signals) received by antenna 34. Additionally or alternatively, primary receiver 36A may be awake and may gather wireless performance metric data from the radio-frequency energy received by antenna 34.

For example, when wireless circuitry 24 is in low linearity mode 102, secondary receiver 36B may gather the wireless performance metric data (e.g., during one of blocks 94 of FIG. 4). When wireless circuitry 24 is in high linearity mode 100, primary receiver 36A may gather the wireless performance metric data (e.g., during block 96 of FIG. 4, during a DRX period, etc.). When wireless circuitry 24 is in RX diversity mode 104, primary receiver 36A and/or secondary receiver 36B may gather the wireless performance metric data.

At operation 122, secondary receiver 36B and/or primary receiver 36A may place wireless circuitry 24 in a selected one of modes 100-104 or may perform an out of service (OOS) procedure (e.g., may update or change the operating mode of wireless circuitry 24) for the next DRX cycle based on the gathered wireless performance metric data. The OOS procedure may help to reestablish a connection between the device and the base station when the wireless performance (e.g., radio-frequency channel conditions) of device 10 are sufficiently low.

At operation 124, primary receiver 36A and/or secondary receiver 36B may receive radio-frequency signals (e.g., beginning at the next DRX cycle) in the selected operating mode (e.g., the receiver(s) may receive signals in one of operating modes 100-104 or may perform the OOS procedure).

For example, when the wireless performance metric data (e.g., SNR values) gathered by secondary receiver 36B and/or primary receiver 36A exceeds a first threshold value TH1, wireless circuitry 24 may be placed (e.g., by one or both receivers and/or control circuitry 14 of FIG. 1) in a single-receiver operating mode such as low linearity mode 102 or high linearity mode 100 of FIG. 5. Wireless circuitry 24 may be placed in low linearity mode 102 when the received radio-frequency energy associated with the wireless performance metric data does not include a paging signal indicative of subsequent data allocation for device 10 that would require high linearity. Wireless circuitry 24 may be placed in high linearity mode 100 when the received radio-frequency energy includes paging signal indicative of subsequent data allocation for device 10 that would require high linearity.

When the wireless performance metric data (e.g., SNR values) gathered by secondary receiver 36B and/or primary receiver 36A is less than the first threshold value TH1 but exceeds a second threshold value TH2, wireless circuitry 24 may be placed (e.g., by one or both receivers and/or control circuitry 14 of FIG. 1) in RX diversity mode 104 of FIG. 5. This may serve to boost the receiver sensitivity of wireless circuitry 24 by configuring both primary receiver 36A and secondary receiver 36B to receive radio-frequency signals. The boosted sensitivity may help to compensate for the relatively low wireless performance levels (e.g., relatively poor channel conditions) exhibited by wireless circuitry 24, thereby allowing wireless circuitry 24 to correctly receive wireless data (e.g., PDCCH or PDSCH data) from the received radio-frequency energy.

When the wireless performance metric data (e.g., SNR values) gathered by secondary receiver 36B and/or primary receiver 36A is less than the second threshold value TH2, this may be indicative of a dropped connection between device 10 and the base station and wireless circuitry 24 may perform the OOS procedure to reestablish the connection. In this way, wireless circuitry 24 may be dynamically monitored and adjusted to receive signals using one or both of receivers 36A and 36B as needed over time, while minimizing power consumption of the system and without introducing the timing or DSP optimization difficulties associated with using a single receiver to receive signals.

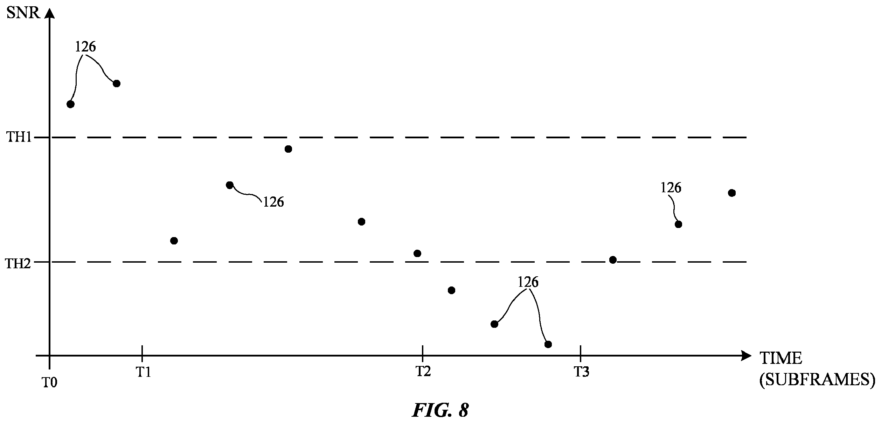

FIG. 8 is a plot of wireless performance metric data measurements 126 (e.g., SNR values) gathered over time by primary receiver 36A and/or secondary receiver 36B (e.g., while processing operation 120 of FIG. 7). As shown by measurements 126, the wireless performance metric data may be compared to first threshold value (level) TH1 and second threshold value (level) TH2. When measurements 126 exceed first threshold value TH1 (e.g., between times T0 and T1), wireless circuitry 24 may be placed in high linearity mode 100 (e.g., when data has been allocated for device 10) or low linearity mode 102 (e.g., to monitor for the receipt of paging signals). The relatively high SNR associated with measurements 126 exceeding first threshold value TH1 may mean that a single receiver is sufficient to properly receive the corresponding radio-frequency signals.

When measurements 126 exceed second threshold value TH2 but not first threshold value TH1 (e.g., between times T1 and T2 or after time T3), wireless circuitry 24 may be placed in RX diversity mode 104 (e.g., wireless circuitry 24 may be switched from high linearity mode 100 or low linearity mode 102 to RX diversity mode 104 at time T1). The relatively low SNR associated with measurements 126 exceeding second threshold value TH2 but not first threshold value TH1 may mean that both receivers may be needed to provide sufficient receiver sensitivity to properly receive the corresponding radio-frequency signals.

When measurements 126 fall below second threshold value TH2 (e.g., between times T2 and T3), wireless circuitry 24 may perform the OOS procedure to reestablish the connection to the network (e.g., wireless circuitry 24 may return to RX diversity mode 104 at time T3). If the wireless performance metric data then exceeds first threshold value TH1, wireless circuitry 24 may be switched from RX diversity mode 104 to high linearity mode 100 or low linearity mode 102. First threshold value TH1 may, for example, be the minimum SNR at which a single receiver (e.g., primary receiver 36A or secondary receiver 36B) is able to successfully decode wireless data in the received radio-frequency energy (e.g., 5 dB, 4 dB, 6 dB, or other values). Second threshold value TH2 may, for example, be the minimum SNR at which both receiver 36A and 36B are collectively able to successfully decode wireless data in the received radio-frequency energy (e.g., 2 dB or other values less than first threshold value TH1). The example of FIG. 8 is illustrative and non-limiting.

As used herein, the term "concurrent" means at least partially overlapping in time. In other words, first and second events are referred to herein as being "concurrent" with each other if at least some of the first event occurs at the same time as at least some of the second event (e.g., if at least some of the first event occurs during, while, or when at least some of the second event occurs). First and second events can be concurrent if the first and second events are simultaneous (e.g., if the entire duration of the first event overlaps the entire duration of the second event in time) but can also be concurrent if the first and second events are non-simultaneous (e.g., if the first event starts before or after the start of the second event, if the first event ends before or after the end of the second event, or if the first and second events are partially non-overlapping in time). As used herein, the term "while" is synonymous with "concurrent."

Device 10 may gather and/or use personally identifiable information. It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

The methods and operations described above in connection with FIGS. 1-5 may be performed by the components of device 10 using software, firmware, and/or hardware (e.g., dedicated circuitry or hardware). Software code for performing these operations may be stored on non-transitory computer readable storage media (e.g., tangible computer readable storage media) stored on one or more of the components of device 10. The software code may sometimes be referred to as software, data, instructions, program instructions, or code. The non-transitory computer readable storage media may include drives, non-volatile memory such as non-volatile random-access memory (NVRAM), removable flash drives or other removable media, other types of random-access memory, etc. Software stored on the non-transitory computer readable storage media may be executed by processing circuitry on one or more of the components of device 10. The processing circuitry may include microprocessors, central processing units (CPUs), application-specific integrated circuits with processing circuitry, or other processing circuitry.

In accordance with an embodiment, an electronic device is provided that includes an antenna, a first receiver having a first low noise amplifier (LNA), a second receiver having a second LNA, a first signal path that couples the antenna to an input of the first LNA, a third LNA disposed on the first signal path and a second signal path that couples a node on the first signal path to an input of the second LNA, the node being disposed on the first signal path between an output of the third LNA and the input of the first LNA.

In accordance with another embodiment, the second LNA has lower linearity than the first LNA.

In accordance with another embodiment, the second receiver includes a wake up receiver.

In accordance with another embodiment, the node includes a radio-frequency signal splitter.

In accordance with another embodiment, the node includes a radio-frequency coupler.

In accordance with another embodiment, the node is free from switches.

In accordance with another embodiment, the first receiver has a first digital signal processor (DSP) coupled to an output of the first LNA, the second receiver has a second DSP coupled to an output of the second LNA, and the second DSP has a lower sampling rate than the first DSP.

In accordance with another embodiment, the electronic device includes a control path that couples the second DSP to the first DSP.

In accordance with another embodiment, the second DSP is configured to wake the first receiver by transmitting a control signal over the control path.

In accordance with another embodiment, the first DSP and the second DSP are configured to concurrently attempt to decode wireless data in radio-frequency signals received by the antenna.

In accordance with another embodiment, the electronic device includes a fourth LNA disposed on the second signal path, the second signal path including a bypass path around the fourth LNA and a switch disposed on the second signal path and configured to couple the node to a selected one of the fourth LNA and the bypass path.

In accordance with another embodiment, the first receiver and the second receiver are integrated into a system-on-chip (SOC) and the third LNA is external to the SOC.

In accordance with an embodiment, a method of operating an electronic device, the method is provided that includes receiving, using an antenna, radio-frequency energy, passing, using a low noise amplifier (LNA), the radio-frequency energy to a second LNA in a first receiver and concurrently to a third LNA in a second receiver, the second receiver consumes less power than the first receiver, attempting to decode, using the second receiver while the first receiver is asleep, a physical downlink control channel (PDCCH) signal from the radio-frequency energy and waking, using the second receiver responsive to the second receiver decoding the PDDCH signal, the first receiver for a subsequent data reception cycle.

In accordance with another embodiment, the method includes attempting to decode, using the first receiver during the subsequent data reception cycle, a physical downlink shared channel (PDSCH) signal from the radio-frequency energy.

In accordance with another embodiment, the method includes attempting to decode, using the second receiver during the subsequent data reception cycle and concurrent with the first receiver attempting to decode the PDSCH signal from the radio-frequency energy, data from the radio-frequency energy.

In accordance with another embodiment, the second receiver is asleep during the subsequent data reception cycle.

In accordance with another embodiment, the method includes generating, using the second receiver, wireless performance metric data from the radio-frequency energy prior to the subsequent data reception cycle and activating, using one or more processors, one or both of the first receiver and the second receiver during the subsequent data reception cycle based on the wireless performance metric data.

In accordance with an embodiment, a method of operating an electronic device, the method is provided that includes receiving, using an antenna, radio-frequency energy, passing, using a low noise amplifier (LNA), the radio-frequency energy to a first receiver and to a second receiver that operates at a lower sample rate than the first receiver, generating, using the second receiver during a first period, wireless performance metric data from the radio-frequency energy and attempting to decode, using the first receiver and the second receiver responsive to the wireless performance metric data gathered during the first period being less than a threshold value, a signal from the radio-frequency energy during a second period subsequent to the first period.

In accordance with another embodiment, the method includes attempting to decode, during the second period and responsive to the wireless performance metric data gathered during the first period exceeding the threshold value, the signal from the radio-frequency energy using the first receiver but not the second receiver.

In accordance with another embodiment, the method includes waking, using the second receiver, the first receiver responsive to the second receiver decoding a paging signal in the radio-frequency energy.

The foregoing is merely illustrative and various modifications can be made to the described embodiments. The foregoing embodiments may be implemented individually or in any combination.

Some exemplary embodiments of the present disclosure are set out in the following items:
1. An electronic device comprising:
   an antenna;
   a first receiver having a first low noise amplifier (LNA);
   a second receiver having a second LNA;
   a first signal path that couples the antenna to an input of the first LNA;
   a third LNA disposed on the first signal path; and
   a second signal path that couples a node on the first signal path to an input of the second LNA, the node being disposed on the first signal path between an output of the third LNA and the input of the first LNA.
2. The electronic device of item 1, wherein the second LNA has lower linearity than the first LNA.
3. The electronic device of any of items 1-2, wherein the second receiver comprises a wake up receiver.
4. The electronic device of any of items 1-3, wherein the node comprises a radio-frequency signal splitter.
5. The electronic device of any of items 1-4, wherein the node comprises a radio-frequency coupler.
6. The electronic device of any of items 1-5, wherein the node is free from switches.
7. The electronic device of any of items 1-6, wherein the first receiver has a first digital signal processor (DSP) coupled to an output of the first LNA, the second receiver has a second DSP coupled to an output of the second LNA, and the second DSP has a lower sampling rate than the first DSP.
8. The electronic device of item 7, further comprising a control path that couples the second DSP to the first DSP.
9. The electronic device of any of items 7-8, wherein the second DSP is configured to wake the first receiver by transmitting a control signal over the control path.
10. The electronic device of any of items 7-9, wherein the first DSP and the second DSP are configured to concurrently attempt to decode wireless data in radio-frequency signals received by the antenna.
11. The electronic device of any of items 1-10, further comprising:
   a fourth LNA disposed on the second signal path, the second signal path including a bypass path around the fourth LNA; and
   a switch disposed on the second signal path and configured to couple the node to a selected one of the fourth LNA and the bypass path.
12. The electronic device of any of items 1-11, wherein the first receiver and the second receiver are integrated into a system-on-chip (SOC) and the third LNA is external to the SOC.
13. A method of operating an electronic device, the method comprising:
   receiving, using an antenna, radio-frequency energy;
   passing, using a low noise amplifier (LNA), the radio-frequency energy to a second LNA in a first receiver and concurrently to a third LNA in a second receiver, wherein the second receiver consumes less power than the first receiver;
   attempting to decode, using the second receiver while the first receiver is asleep, a physical downlink control channel (PDCCH) signal from the radio-frequency energy; and
   waking, using the second receiver responsive to the second receiver decoding the PDDCH signal, the first receiver for a subsequent data reception cycle.
14. The method of item 13, further comprising:
   attempting to decode, using the first receiver during the subsequent data reception cycle, a physical downlink shared channel (PDSCH) signal from the radio-frequency energy.
15. The method of item 14, further comprising:
   attempting to decode, using the second receiver during the subsequent data reception cycle and concurrent with the first receiver attempting to decode the PDSCH signal from the radio-frequency energy, data from the radio-frequency energy.
16. The method of any of items 13-15, wherein the second receiver is asleep during the subsequent data reception cycle.
17. The method of any of items 13-16, further comprising:
   generating, using the second receiver, wireless performance metric data from the radio-frequency energy prior to the subsequent data reception cycle; and
   activating, using one or more processors, one or both of the first receiver and the second receiver during the subsequent data reception cycle based on the wireless performance metric data.
18. A method of operating an electronic device, the method comprising:
   receiving, using an antenna, radio-frequency energy;
   passing, using a low noise amplifier (LNA), the radio-frequency energy to a first receiver and to a second receiver that operates at a lower sample rate than the first receiver;
   generating, using the second receiver during a first period, wireless performance metric data from the radio-frequency energy; and
   attempting to decode, using the first receiver and the second receiver responsive to the wireless performance metric data gathered during the first period being less than a threshold value, a signal from the radio-frequency energy during a second period subsequent to the first period.
19. The method of item 18, further comprising:
   attempting to decode, during the second period and responsive to the wireless performance metric data gathered during the first period exceeding the threshold value, the signal from the radio-frequency energy using the first receiver but not the second receiver.
20. The method of any of items 18-19, further comprising:
   waking, using the second receiver, the first receiver responsive to the second receiver decoding a paging signal in the radio-frequency energy.

Some further exemplary embodiments of the present disclosure are set out in the following examples:
1. An electronic device comprising:
   an antenna;
   a first receiver having a first low noise amplifier (LNA);
   a second receiver having a second LNA;
   a first signal path that couples the antenna to an input of the first LNA;
   a third LNA disposed on the first signal path; and
   a second signal path that couples a node on the first signal path to an input of the second LNA, the node being disposed on the first signal path between an output of the third LNA and the input of the first LNA.
2. The electronic device of example 1, wherein the second LNA has lower linearity than the first LNA.
3. The electronic device of any of examples 1-2, wherein the second receiver comprises a wake up receiver.
4. The electronic device of any of examples 1-3, wherein the node comprises a radio-frequency signal splitter.
5. The electronic device of any of examples 1-4, wherein the node comprises a radio-frequency coupler.
6. The electronic device of any of examples 1-5, wherein the node is free from switches.
7. The electronic device of any of examples 1-6, wherein the first receiver has a first digital signal processor (DSP) coupled to an output of the first LNA, the second receiver has a second DSP coupled to an output of the second LNA, and the second DSP has a lower sampling rate than the first DSP.
8. The electronic device of example 7, further comprising a control path that couples the second DSP to the first DSP.
9. The electronic device of any of examples 7-8, wherein the second DSP is configured to wake the first receiver by transmitting a control signal over the control path.
10. The electronic device of any of examples 7-9, wherein the first DSP and the second DSP are configured to concurrently attempt to decode wireless data in radio-frequency signals received by the antenna.
11. The electronic device of any of examples 1-10, further comprising:
   a fourth LNA disposed on the second signal path, the second signal path including a bypass path around the fourth LNA; and
   a switch disposed on the second signal path and configured to couple the node to a selected one of the fourth LNA and the bypass path.
12. The electronic device of any of examples 1-11, wherein the first receiver and the second receiver are integrated into a system-on-chip (SOC) and the third LNA is external to the SOC.
13. A method of operating an electronic device, the method comprising:
   with an antenna, receiving radio-frequency energy;
   with a low noise amplifier (LNA), concurrently passing the radio-frequency energy to a second LNA in a first receiver and to a third LNA in a second receiver, wherein the second receiver consumes less power than the first receiver;
   with the second receiver, while the first receiver is asleep, attempting to decode a physical downlink control channel (PDCCH) signal from the radio-frequency energy; and
   with the second receiver, when the second receiver decodes the PDDCH signal, waking the first receiver for a subsequent data reception cycle.
14. The method of example 13, further comprising:
   with the first receiver, during the subsequent data reception cycle, attempting to decode a physical downlink shared channel (PDSCH) signal from the radiofrequency energy.
15. The method of example 14, further comprising:
   with the second receiver, during the subsequent data reception cycle, attempting to decode data from the radio-frequency energy concurrent with the first receiver attempting to decode the PDSCH signal from the radio-frequency energy.
16. The method of any of examples 13-15, wherein the second receiver is asleep during the subsequent data reception cycle.
17. The method of any of examples 13-16, further comprising:
   with the second receiver, generating wireless performance metric data from the radio-frequency energy prior to the subsequent data reception cycle; and
   with the second receiver, activating one or both of the first receiver and the second receiver during the subsequent data reception cycle based on the wireless performance metric data.
18. A method of operating an electronic device, the method comprising:
   with an antenna, receiving radio-frequency energy;
   with a low noise amplifier (LNA), passing the radio-frequency energy to a first receiver and to a second receiver that operates at a lower sample rate than the first receiver;
   with the second receiver, during a first period, generating wireless performance metric data from the radio-frequency energy; and
   with the first receiver and the second receiver, when the wireless performance metric data gathered during the first period is less than a threshold value, attempting to decode a signal from the radio-frequency energy during a second period subsequent to the first period.
19. The method of example 18, further comprising:
   when the wireless performance metric data gathered during the first period exceeds the threshold value, attempting, during the second period, to decode the signal from the radio-frequency signal using the first receiver but not the second receiver.
20. The method of any of examples 18-19, further comprising:
   with the second receiver, waking the first receiver when the second receiver decodes a paging signal in the radio-frequency energy.
21. Systems, methods, and devices substantially as set forth herein.

## Claims

1. An electronic device comprising:
an antenna;
a first receiver having a first low noise amplifier (LNA);
a second receiver having a second LNA;
a first signal path that couples the antenna to an input of the first LNA;
a third LNA disposed on the first signal path; and
a second signal path that couples a node on the first signal path to an input of the second LNA, the node being disposed on the first signal path between an output of the third LNA and the input of the first LNA.

2. The electronic device of claim 1, wherein the second LNA has lower linearity than the first LNA.

3. The electronic device of any of claims 1-2, wherein the second receiver comprises a wake up receiver.

4. The electronic device of any of claims 1-3, wherein the node comprises a radio-frequency signal splitter.

5. The electronic device of any of claims 1-4, wherein the node comprises a radio-frequency coupler.

6. The electronic device of any of claims 1-5, wherein the node is free from switches.

7. The electronic device of any of claims 1-6, wherein the first receiver has a first digital signal processor (DSP) coupled to an output of the first LNA, the second receiver has a second DSP coupled to an output of the second LNA, and the second DSP has a lower sampling rate than the first DSP.

8. The electronic device of claim 7, further comprising a control path that couples the second DSP to the first DSP, wherein the second DSP is configured to wake the first receiver by transmitting a control signal over the control path.

9. The electronic device of any of claims 7-8, wherein the first DSP and the second DSP are configured to concurrently attempt to decode wireless data in radio-frequency signals received by the antenna.

10. The electronic device of any of claims 1-9, further comprising:
a fourth LNA disposed on the second signal path, the second signal path including a bypass path around the fourth LNA; and
a switch disposed on the second signal path and configured to couple the node to a selected one of the fourth LNA and the bypass path.

11. The electronic device of any of claims 1-10, wherein the first receiver and the second receiver are integrated into a system-on-chip (SOC) and the third LNA is external to the SOC.

12. A method of operating an electronic device, the method comprising:
receiving, using an antenna, radio-frequency energy;
passing, using a low noise amplifier (LNA), the radio-frequency energy to a second LNA in a first receiver and concurrently to a third LNA in a second receiver, wherein the second receiver consumes less power than the first receiver;
attempting to decode, using the second receiver while the first receiver is asleep, a physical downlink control channel (PDCCH) signal from the radio-frequency energy; and
waking, using the second receiver responsive to the second receiver decoding the PDDCH signal, the first receiver for a subsequent data reception cycle.

13. The method of claim 12, further comprising:
attempting to decode, using the first receiver during the subsequent data reception cycle, a physical downlink shared channel (PDSCH) signal from the radio-frequency energy.

14. The method of claim 13, further comprising:
attempting to decode, using the second receiver during the subsequent data reception cycle and concurrent with the first receiver attempting to decode the PDSCH signal from the radio-frequency energy, data from the radio-frequency energy.

15. The method of any of claims 12-14, wherein the second receiver is asleep during the subsequent data reception cycle, further comprising:
generating, using the second receiver, wireless performance metric data from the radio-frequency energy prior to the subsequent data reception cycle; and
activating, using one or more processors, one or both of the first receiver and the second receiver during the subsequent data reception cycle based on the wireless performance metric data.
